# EUROPÄISCHE PATENTSCHRIFT

(11) **EP 2 851 659 B1**
(45) Veröffentlichungstag und Bekanntmachung des Hinweises auf die Patenterteilung: **09.11.2016**
(21) Anmeldenummer: 13185603.1
(22) Anmeldetag: 23.09.2013
(51) Int. Cl.: G01G 13/00, G01G 13/02, G01G 17/02

(54) **Teilmengenwaage sowie Betrieb einer Teilmengenwaage**
Portional weighing machine and operation of a portional weighing machine
Balance de quantités partielles et fonctionnement d'une balance de quantités partielles

(43) Veröffentlichungstag der Anmeldung: 25.03.2015
(73) Patentinhaber: HD Wiegetechnik & Sondermaschinen GmbH, 35576 Wetzlar (DE)
(72) Erfinder: Debus, Heinz, D-35614 Asslar (DE); Schmehl, Frank, D-35614 Asslar (DE)
(74) Vertreter: advotec.

(56) Entgegenhaltungen:
- GB-A- 2 003 284
- GB-A- 2 137 969
- JP-A- S57 192 831
- Yamato Scale: "Yamato Dataweigh Omega weighing Salad", Yamato , 11. Dezember 2012 (2012-12-11), XP002718469, Gefunden im Internet: URL:https://www.youtube.com/watch?v=6dis0j 8HAaw [gefunden am 2014-01-09]
- Anonymous: "Dataweigh Fresh Food and Salad", Yamato Scale , 21. April 2011 (2011-04-21), XP002718490, Gefunden im Internet: URL:http://www.poscosecha.com/download/pro duct/10637/10582/1505633799/757152/cms/yam ato+fresh+produce_b0237en01a00.pdf/ [gefunden am 2014-01-09]

## Beschreibung

Die vorliegende Erfindung betrifft eine Teilmengenwaage mit einer Produktzuführeinrichtung, einer Produktverteileinrichtung und einer Mehrzahl von Teilmengen-Vorratsbehältern zur Übergabe der Teilmengen an eine Wiegeeinrichtung, von der die Teilmengen in einen Verpackungsbehälter gelangen, wobei die Zuführung des Produkts in die Teilmengen-Vorratsbehälter jeweils mittels einer eine Förderrinne aufweisenden und dem Teilmengen-Vorratsbehälter zugeordneten Vibrationsfördereinrichtung erfolgt. Des Weiteren betrifft die Erfindung ein Verfahren zur Überführung einer Teilmenge eines mittels einer Produktzuführeinrichtung einer Produktverteileinrichtung zugeführten Produkts zu einem Teilmengen-Vorratsbehälter, der zur Übergabe der Teilmengen an eine Wiegevorrichtung dient, von der die Teilmengen in einen Verpackungsbehälter gelangen, wobei die Zuführung des Produkts in die Teilmengen-Vorratsbehälter jeweils mittels einer eine Förderrinne aufweisenden und den Teilmengen-Vorratsbehälter zugeordneten Vibrationsfördereinrichtung erfolgt.

Eine Teilmengenwaage der eingangs genannten Art ist aus Yamato Scale: "Yamato Dataweigh Omega weighing Salad", Yamato, 11. Dezember 2012 (2012-12-11), XP002718469, gefunden im Internet: URL:https://www.youtube.com/watch?v=6dis=j8HAaw [gefunden am 2014-01-09] bekannt.

Die GB 2 003 284 A2 zeigt eine Abfülleinrichtung zur Abfüllung von abgewogenen Kartoffelchips-Verpackungsmengen, bei der die Kartoffelchips über einen Vibrationsförderer in eine Wiegevorrichtung gefördert werden und eine gewichtsmäßig definierte Kartoffelchipsmenge zur Abfüllung in eine Verpackung in einen Ausgabetrichter übergeben wird. Der Ausgabetrichter ist mit einer Düseneinrichtung zur Beaufschlagung der Kartoffelchips mit einer Luftströmung versehen.

Teilmengenwaagen der eingangs genannten Art werden zur Herstellung von Verpackungs- bzw. Verkaufseinheiten unterschiedlichster Produkte eingesetzt. Grundsätzlich ist das Prinzip der Teilmengenwaagen, dass ein kontinuierlich zugeführter Produktstrom in Teilmengen aufgeteilt einer Mehrzahl von Teilmengen-Vorratsbehältern zugeführt wird, anschließend eine Gewichtsbestimmung der Teilmengen und schließlich eine Kombination mehrerer Teilmengen zur Befüllung eines Verpackungsbehälters derart ausgewählt wird, dass sich die Teilmengen-Produktgewichte zu dem gewünschten Verpackungsgewicht des Produktes addieren.

Das Befüllen der Teilmengen-Vorratsbehälter erfolgt mittels einer eine Förderrinne aufweisenden und dem jeweiligen Teilmengen-Vorratsbehälter zugeordneten Vibrationsfördereinrichtung. Insbesondere beim Abfüllen von Blattsalaten hat es sich herausgestellt, dass es aufgrund des hohen Feuchtegehalts der von der Produktverteileinrichtung auf eine Förderfläche der Förderrinne gelangenden Salatblätter trotz der Vibrationsbeaufschlagung der Förderrinne zu einem unerwünschten Anhaften von Salatblättern auf der Förderfläche kommt, so dass eine störungsfreie Vibrationsförderung der Blattsalate in der Regel einen der Vibrationsförderung vorausgehenden Trocknungsvorgang erforderlich macht, um eine Restfeuchte zu erreichen, die eine reibungslose Vibrationsförderung in der Förderrinne ermöglicht.

Hieraus ergeben sich zum einen durch den zusätzlichen Trocknungsvorgang erhöhte Kosten bei der Verpackung von Blattsalaten, zum anderen müssen zulässige Abtropfgewichte des abgefüllten Produkts häufig noch unterschritten werden, um einen reibungslosen Verpackungsvorgang zu ermöglichen. Dem dadurch bedingten Vorteil für den Verbraucher steht ein entsprechender Nachteil des Erzeugers gegenüber.

Der vorliegenden Erfindung liegt daher die Aufgabe zugrunde, das Abfüllen von Produkten, insbesondere Blattsalaten, auch bei vergleichsweise hohem Feuchtegehalt zu ermöglichen.

Diese Aufgabe wird durch eine Teilmengenwaage mit den Merkmalen des Anspruchs 1 gelöst.

Bei der erfindungsgemäßen Teilmengenwaage ist in einem Übergabebereich zwischen der Produktverteileinrichtung und der Förderrinne eine Düseneinrichtung zur Beaufschlagung einer Förderfläche der Förderrinne mit einer in Förderrichtung ausgerichteten Luftströmung angeordnet.

Hierdurch ist es möglich, der Vibrationsbeaufschlagung der Förderrinne eine gerichtete Luftströmung zu überlagern, so dass die Förderwirkung der Vibrationsbeaufschlagung der Förderrinne unterstützt wird. Darüber hinaus kann die Fördereinrichtung mit einer geringeren Schwingungsamplitude betrieben werden. Gleichzeitig mit dem Vortriebsimpuls, der durch die Strömungsbeaufschlagung erfolgt, bewirkt die Strömungsbeaufschlagung eine zumindest geringe Reduzierung des Feuchtegehalts der in der Förderrinne geförderten Produkte, ohne dass ein der Produktzuführung vorausgehender Trocknungsvorgang erforderlich wäre.

Vorzugsweise ist die Düseneinrichtung unterhalb einer Übergabekante der Produktverteileinrichtung und entgegen der Förderrichtung der Förderrinne gegenüber der Übergabekante zurückversetzt angeordnet, so dass zum einen der Förderweg der von der Produktverteileinrichtung in die Förderrinne geförderten Produkt-Teilmenge nicht beeinflusst wird und zum anderen eine Beaufschlagung des Produkts bereits während des freien Falls von der Produktverteileinrichtung in die Förderrinne ermöglicht wird. Somit ist das Produkt besonders wirkungsvoll mit der Luftströmung beaufschlagbar.

Wenn die Düseneinrichtung an einem Aufgabeende der Förderrinne unterhalb eines das Aufgabeende überragenden und durch die Übergabekante begrenzten, dachartigen Vorsprungs der Produktverteileinrichtung angeordnet ist, befindet sich die Düseneinrichtung in einem geschützten Bereich, so dass ein direktes Auftreffen des Produkts auf die Düseneinrichtung und damit möglicherweise eine Beeinflussung der freien Düsenströmung verhindert wird.

Besonders bevorzugt ist es, wenn die Düseneinrichtung derart ausgebildet ist, dass die Beaufschlagung der Förderfläche mit der Luftströmung derart erfolgt, dass auf der Förderfläche der Förderrinne eine Luftpolster ausgebildet wird, so dass die Dauer des Kontakts des Produkts mit der Förderfläche während der Vibrastionsförderung zumindest reduziert wird und zwischen dem Produkt, also beispielsweise den Salatblättern, und der Förderfläche eine tragende Luftschicht ausgebildet ist.

Wenn die Düseneinrichtung derart ausgebildet ist, dass die Luftströmung einen im Wesentlichen rechteckförmigen Strömungsquerschnitt aufweist, wird die Ausprägung des vorstehend beschriebenen vorteilhaften Effekts noch deutlicher.

Vorzugsweise weist die Düseneinrichtung zumindest eine Düse mit einem rechteckförmigen Düsenschlitz auf.

Insbesondere dann, wenn die Düseneinrichtung eine Mehrzahl von in einer Reihe parallel zu der Förderfläche angeordnete Düsen aufweist, können die Düsen der Düseneinrichtung auch einen runden Düsenquerschnitt aufweisen, so dass auch in diesem Fall durch Überlagerung der einzelnen Düsenströmungen ein annähernd rechteckförmig ausgebildeter Strömungsquerschnitt auf der Förderfläche ermöglicht wird.

Gemäß einer weiteren Lösung der zugrunde liegenden Aufgabenstellung wird eine Düseneinrichtung für eine Teilmengenwaage nach einem oder mehreren der Ansprüche 1 bis 7 vorgeschlagen, wobei die Düseneinrichtung zusammen mit der Förderrinne eine modulare Einheit ausbildet, so dass die Ausbildung einer erfindungsgemäßen Teilmengenwaage auch durch den Austausch einer oder mehrerer Förderrinnen gegen eine Düseneinrichtung möglich ist, die zusammen mit der Förderrinne eine modulare Einheit ausbildet.

Gemäß einer weiteren Lösung der zugrunde liegenden Aufgabenstellung wird gemäß Anspruch 9 ein Verfahren zur Überführung einer Teilmenge einer mittels einer Produktzuführeinrichtung einer Produktverteileinrichtung zugeführten Produkts zu einem Teilmengen-Vorratsbehälter vorgeschlagen.

Erfindungsgemäß wird in einem Übergabebereich zwischen der Produktverteileinrichtung und der Förderrinne eine Förderfläche der Förderfläche mittels einer Düseneinrichtung mit einer in Förderrichtung ausgerichteten Luftströmung beaufschlagt.

Vorzugsweise erfolgt die Beaufschlagung derart, dass auf der Förderfläche ein Luftpolster ausgebildet wird.

Besonders bevorzugt ist es, wenn die Beaufschlagung derart erfolgt, dass die Luftströmung parallel zur Förderfläche ausgebildet wird.

Wahlweise kann die Beaufschlagung der Förderfläche diskontinuierlich oder kontinuierlich erfolgen, wobei es besonders bevorzugt wird, wenn die Beaufschlagung der Förderfläche in Abhängigkeit von Prozessparametern des Betriebs der Teilmengenwaage erfolgt.

Insbesondere ist es vorteilhaft, wenn die Beaufschlagung der Förderfläche mit der Luftströmung während der Beaufschlagung der Förderrinne mit Vibrationen erfolgt.

Nachfolgend wird eine bevorzugte Ausführungsform der Teilmenenwaage sowie eine in der Teilmengenwaage zum Einsatz kommenden Düseneinrichtung und das Verfahren zum Betrieb der mit der Düseneinrichtung versehenen Teilmengenwaage Bezug nehmend auf die Zeichnung näher erläutert.

Es zeigen:
- **Fig. 1**: eine Teilmengenwaage in isometrischer Darstellung;
- **Fig. 2**: die in Fig. 1 dargestellte Teilmengenwaage in teilweise demontiertem Zustand mit Darstellung einer Förderstrecke einer von einer Produktverteileinrichtung mittels einer Förderrinne einem Teilmengen-Vorratsbehälter zugeführten Produktteilmenge;
- **Fig. 3**: eine vergrößerte Teilansicht der in Fig. 2 dargestellten Teilmengenwaage.

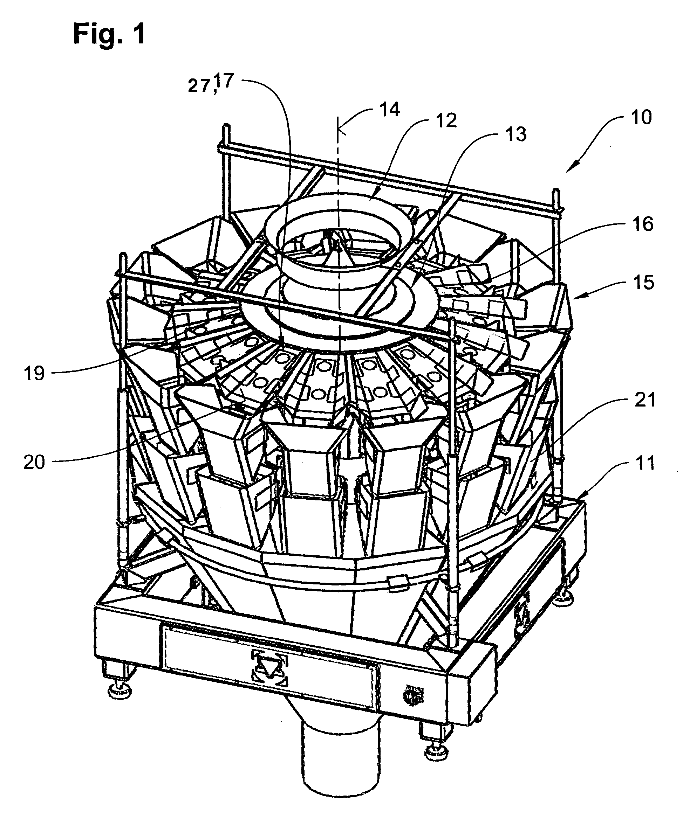

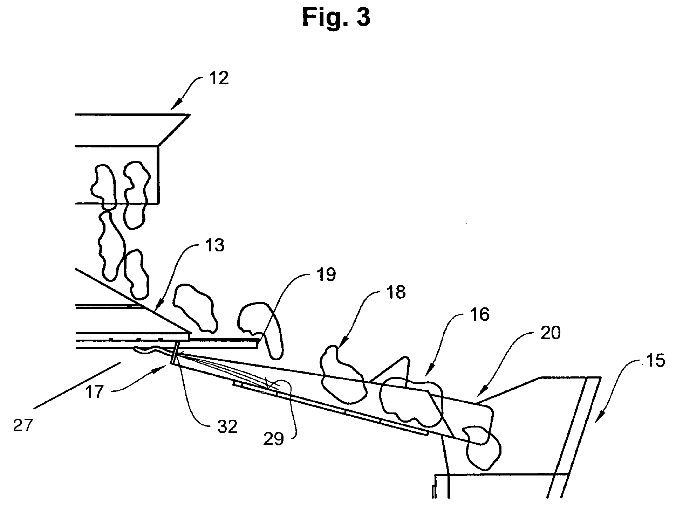

**Fig. 1** zeigt eine Teilmengenwaage 10, die an einer Trägerstruktur 11 angeordnet ist, einen hier durch einen Zuführtrichter gebildete Produktzuführeinrichtung 12, eine unterhalb der Produktzuführeinrichtung 12, hier durch eine rotierende Verteilerscheibe ausgebildete Produktverteileinrichtung 13 und bei dem dargestellten Ausführungsbeispiel eine in konzentrischer Anordnung um eine Drehachse 14 der Produktverteileinrichtung 13 angeordnete Mehrzahl von Teilmengen-Vorratsbehältern 15, aufweist. Zwischen der Produktverteileinrichtung 13 und den Teilmengen-Vorratsbehältern 15 sind Förderrinnen 16 angeordnet, welche mit einem Aufgabeende 17 zur Übernahme von auf der Produktverteileinrichtung 13 angeordneten Produkten 18 (Fig. 3) unterhalb einer Übergabekante 19 der Produktverteileinrichtung 13 angeordnet sind und mit einem Abgabeende 20 oberhalb des jeweils zugeordneten Teilmengen-Vorratsbehälters 15 angeordnet sind.

Unterhalb der Teilmengen-Vorratsbehälter 15 befindet sich bei dem in **Fig. 1** dargestellten Beispiel der Teilmengenwaage 10 jeweils eine Zwischenspeichereinrichtung 21, die ebenso wie die oberhalb der Zwischenspeichereinrichtung 21 angeordnete Teilmengen-Vorratsbehälter 15 mit einer ansteuerbaren Bodenklappe 22 bzw. 23 versehen ist. Die Zwischenspeichereinrichtungen 21 sind mit ihren Bodenklappen 23 oberhalb einer hier trichterförmig ausgebildeten Sammeleinrichtung 24 angeordnet, die an ihrem unteren Ende eine Produktausgabeeinrichtung 25 aufweist.

Im Betrieb der Teilmengenwaage 10 gelangt das auf die Teilmengen-Vorratsbehälter 15 zu verteilende Produkt kontinuierlich durch die Produktzuführeinrichtung 12 auf die Produktverteileinrichtung 13. Von der rotierenden Produktverteileinrichtung 13 wird das Produkt, bei dem es sich im vorliegenden Fall um Salatblätter handelt, auf die Förderrinnen 16 verteilt und von den mit Schwingungen beaufschlagten Förderrinnen 16 in die Teilmengen-Vorratsbehälter 15 gefördert. Von den Teilmengen-Vorratsbehältern 15 werden durch Öffnung der Bodenklappe 22 Produktteilmengen an die darunter angeordnete Zwischenspeichereinrichtung 21 übergeben, die mit einer hier nicht näher dargestellten Wiegeeinrichtung zur Bestimmung der in der Zwischenspeichereinrichtung 21 aufgenommenen Produktteilmenge versehen sind.

In Folge der von den Förderrinnen 16 in die jeweiligen Teilmengen-Vorratsbehälter 15 geförderten, nicht exakt mengenmäßig definierten Produktteilmengen weisen die Zwischenspeichereinrichtungen 21 nach Übernahme der Produktteilmengen aus den Teilmengen-Vorratsbehältern 15 von einander abweichenden Produktteilmengen auf. Zur Befüllung eines unterhalb der Produktausgabeeinrichtung 25 angeordneten Verpackungsbehälters 26 wird nun eine Kombination von Zwischenspeichereinrichtungen 21 durch Betätigung deren Bodenklappen 23 geöffnet, derart, dass die Summe der Kombination von Produkt-Teilmengen dem gewünschten Produktgewicht bzw. der gewünschten Abfüllmenge des in den Verpackungsbehälter 26 abgefüllten Produkts entspricht.

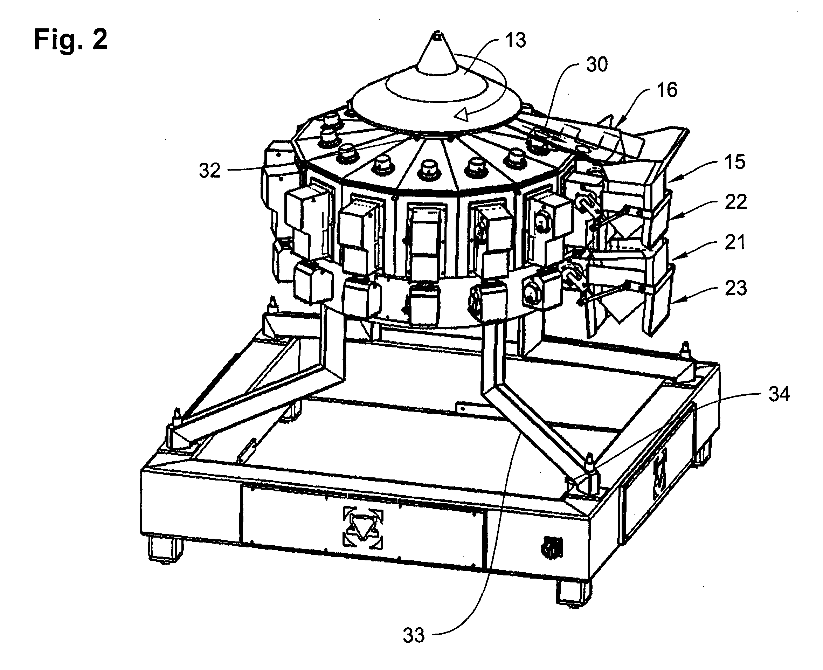

Wie nun aus einer Zusammenschau der **Fig. 1** und **2** hervorgeht, ist an einem axialen Ende der Förderrinnen 16 jeweils im Bereich des Aufgabeendes 17 eine Düseneinrichtung 27 vorgesehen, die unterhalb eines durch die Übergabekante 19 begrenzten, dachartigen Vorsprungs 28 der Produktverteileinrichtung 13 angeordnet ist.

Wie insbesondere die **Fig. 3** zeigt, ist die Düseneinrichtung 27 derart ausgebildet bzw. angeordnet, dass eine Förderfläche 29 der Förderrinne 16 derart mit einer Luftströmung 30 beaufschlagt wird, dass sich auf der Förderfläche 29 ein Luftpolster 31 ausbildet.

Im vorliegenden Fall umfasst die Düseneinrichtung 27 eine Düse 32, die einen zur Förderfläche 29 parallel ausgerichteten, hier nicht näher dargestellten Düsenspalt aufweist, der im Ausströmbereich der Düse 32 eine im Wesentlichen fächerförmig ausgebildet Luftströmung ausbildet, die im Zusammenwirkungen mit Strömungsleiteinrichtungen bildenden Seitenrändern der Förderrinne16 in ausreichender Entfernung von der Düse 32 die Ausbildung eines im Wesentlichen rechteckförmigen Strömungsquerschnitts ermöglicht.

Wie ferner insbesondere die **Fig. 3** zeigt, ist die Düseneinrichtung 27 unmittelbar an dem Aufgabeende 17 der Förderrinne 16 angeordnet, so dass die Düseneinrichtung 27 zusammen mit der Förderrinne 16 eine modulare Einheit bildet und beispielsweise als solche modulare Einheit gegen eine Förderrinne einer konventionellen Teilmengenwaage, die also keine Düseneinrichtung aufweist, ausgetauscht bzw. an der Teilmengenwaage nachgerüstet werden kann.

**Fig. 2** zeigt, dass die Düseneinrichtung 27 über eine Druckleitung 33 mit einer Luftfiltereinheit 34 verbunden ist, die es ermöglicht, die über die Düseneinrichtung 27 auf die Produkte 18, also etwa die Salatblätter, auftreffende Luft zu reinigen, um einen Betrieb der Teilmengenwaage 10 auch unter hygienisch anspruchsvollen Bedingungen zu ermöglichen. Darüber hinaus ist es auch möglich, die Düseneinrichtung 27 zur Beaufschlagung des Produktes 18 mit Gasen oder Aerosolen zu verwenden, die eine Beeinflussung der Produktqualität ermöglichen.

## Patentansprüche

1. Teilmengenwaage (10) mit einer Produktzuführeinrichtung (12), einer Produktverteileinrichtung (13) und einer Mehrzahl von Teilmengen-Vorratsbehältern (15) zur Übergabe der Teilmengen an eine Wiegeeinrichtung, von der die Teilmengen in einen Verpackungsbehälter (26) gelangen, wobei die Zuführung des Produkts (18) in die Teilmengen-Vorratsbehälter (15) jeweils mittels einer eine Förderrinne (16) aufweisenden und dem Teilmengen-Vorratsbehälter (15) zugeordneten Vibrationsfördereinrichtung erfolgt,
**dadurch gekennzeichnet,**
**dass** in einem Übergabebereich zwischen der Produktverteileinrichtung (13) und der Förderrinne (16) eine Düseneinrichtung (27) zur Beaufschlagung einer Förderfläche (29) der Förderrinne (16) mit einer in Förderrichtung ausgerichteten Luftströmung (30) angeordnet ist.

2. Teilmengenwaage nach Anspruch 1,
**dadurch gekennzeichnet,**
**dass** die Düseneinrichtung (27) unterhalb einer Übergabekante (19) der Produktverteileinrichtung (13) und entgegen der Förderrichtung der Förderrinne (16) gegenüber der Übergabekante (19) zurückversetzt angeordnet ist.

3. Teilmengenwaage nach Anspruch 2,
**dadurch gekennzeichnet,**
**dass** die Düseneinrichtung (27) an einem Aufgabeende (17) der Förderrinne (16) unterhalb eines das Aufgabeende überragenden und durch die Übergabekante (19) begrenzten, dachartigen Vorsprungs (28) der Produktverteileinrichtung (13) angeordnet ist.

4. Teilmengenwaage nach einem der vorangehenden Ansprüche,
**dadurch gekennzeichnet,**
**dass** die Düseneinrichtung (27) derart ausgebildet ist, dass die Beaufschlagung der Förderfläche (29) mit der Luftströmung (30) derart erfolgt, dass auf der Förderfläche (29) ein Luftpolster (31) ausgebildet wird.

5. Teilmengenwaage nach Anspruch 4,
**dadurch gekennzeichnet,**
**dass** die Düseneinrichtung (27) derart ausgebildet ist, dass die Luftströmung (30) einen im Wesentlichen rechteckförmigen Strömungsquerschnitt aufweist.

6. Teilmengenwaage nach Anspruch 5,
**dadurch gekennzeichnet,**
**dass** die Düseneinrichtung (27) zumindest eine Düse (32) mit einem rechteckförmigen Düsenschlitz aufweist.

7. Teilmengenwaage nach Anspruch 5,
**dadurch gekennzeichnet,**
**dass** die Düseneinrichtung eine Mehrzahl von in einer Reihe und parallel zu der Förderfläche (29) der Förderrinne (16) angeordnete Düsen aufweist.

8. Düseneinrichtung (27) für eine Teilmengenwaage nach einem oder mehreren der Ansprüche 1 bis 7,
**dadurch gekennzeichnet,**
**dass** die Düseneinrichtung (27) zusammen mit der Förderrinne (16) eine modulare Einheit ausbildet.

9. Verfahren zur Überführung einer Teilmenge eines mittels einer Produktzuführeinrichtung (12) einer Produktverteileinrichtung (13) zugeführten Produkts zu einem Teilmengen-Vorratsbehälter (15), der zur Übergabe der Teilmengen an eine Wiegeeinrichtung dient, von der die Teilmengen in einen Verpackungsbehälter (26) gelangen, wobei die Zuführung des Produkts in die Teilmengen-Vorratsbehälter jeweils mittels einer eine Förderrinne (16) aufweisenden und dem Teilmengen-Vorratsbehälter zugeordneten Vibrationsfördereinrichtung erfolgt,
**dadurch gekennzeichnet,**
**dass** in einem Übergabebereich zwischen der Produktverteileinrichtung und der Förderrinne mittels einer Düseneinrichtung (27) eine Förderfläche (29) der Förderrinne mit einer in Förderrichtung ausgerichteten Luftströmung (30) beaufschlagt wird.

10. Verfahren nach Anspruch 9,
**dadurch gekennzeichnet,**
**dass** die Beaufschlagung derart erfolgt, dass auf der Förderfläche (29) der Förderrinne (16) ein Luftpolster (31) ausgebildet wird.

11. Verfahren nach Anspruch 9 oder 10
**dadurch gekennzeichnet,**
**dass** die Beaufschlagung derart erfolgt, dass die Luftströmung (30) parallel zur Förderfläche (29) der Förderrinne (16) ausgebildet wird.

12. Verfahren nach einem der Ansprüche 9 bis 11,
**dadurch gekennzeichnet,**
**dass** die Beaufschlagung der Förderfläche (29) diskontinuierlich erfolgt.

13. Verfahren nach einem der Ansprüche 9 bis 12,
**dadurch gekennzeichnet,**
**dass** die Beaufschlagung der Förderfläche (29) in Abhängigkeit von Prozessparametern des Betriebs der Teilmengenwaage (10) erfolgt.

14. Verfahren nach Anspruch 13,
**dadurch gekennzeichnet,**
**dass** die Beaufschlagung während der Beaufschlagung der Förderrinne (16) mit Vibrationen erfolgt.

## Claims

1. A sub-quantity scale (10) comprising a product feeding device (12), a product distributing device (13) and a plurality of sub-quantity storage containers (15) for transferring the sub-quantities to a weighing device, from which the sub-quantities pass into a packaging container (26), the product (18) being fed into the sub-quantity storage container (15) by means of a vibration conveyor device, which has a conveying channel (16) and is assigned to one of the sub-quantity storage containers (15),
**characterized in that**
a nozzle device (27) for subjecting a conveying surface (29) of the conveying channel (16) to an air flow (30) oriented in the conveying direction is arranged in a transfer area between the product distributing device (13) and the conveying channel (16).

2. The sub-quantity scale according to claim 1,
**characterized in that**
the nozzle device (27) is arranged below a transfer edge (19) of the product distributing device (13) and is recessed against the conveying direction of the conveying channel (16) with respect to the transfer edge (19).

3. The sub-quantity scale according to claim 2,
**characterized in that**
the nozzle device (27) is arranged at a placement end (17) of the conveying channel (16) below a roof-like projection (28) of the product distributing device (13), said projection (28) overlapping the placement end (17) and being limited by the transfer edge (19).

4. The sub-quantity scale according to any one of the preceding claims, **characterized in that**
the nozzle device (27) is designed in such a manner that the conveying surface (29) is subjected to the air flow (30) in such a manner that an air cushion (31) is formed on the conveying surface (29).

5. The sub-quantity scale according to claim 4,
**characterized in that**
the nozzle device (27) is designed in such a manner that the air flow (30) has a substantially rectangular flow cross-section.

6. The sub-quantity scale according to claim 5,
**characterized in that**
the nozzle device (27) comprises at least one nozzle (32) having a rectangular nozzle slot.

7. The sub-quantity scale according to claim 5,
**characterized in that**
the nozzle device comprises a plurality of nozzles arranged in a row and parallel to the conveying surface (29) of the conveying channel (16).

8. A nozzle device (27) for a sub-quantity scale according to one or more of claims 1 to 7,
**characterized in that**
the nozzle device (27) forms a modular unit together with the conveying channel (16).

9. A method for transferring a sub-quantity of a product fed to a product distributing device (13) by means of a product feeding device (12) to a sub-quantity storage container (15), which serves to transfer the sub-quantities to a weighing device, from which the sub-quantities pass into a packaging container (26), the product being fed into the sub-quantity storage containers by means of vibration conveyor devices, which has a conveying channel (16) and is assigned to one of the sub-quantity storage containers,
**characterized in that**
in a transfer area between the product distributing device and the conveying channel, a conveying surface (29) of the conveying channel is subjected to an air flow (30) oriented in the conveying direction by means of a nozzle device (27).

10. The method according to claim 9,
**characterized in that**
the air flow (30) is applied in such a manner that an air cushion (31) is formed on the conveying surface (29) of the conveying channel (16).

11. The method according to claim 9 or 10,
**characterized in that**
the air flow (30) is applied in such a manner that the air flow (30) is formed parallel to the conveying surface (29) of the conveying channel (16).

12. The method according to any one of claims 9 to 11, **characterized in that**
the air flow (30) is applied to the conveying surface (29) in a discontinuous manner.

13. The method according to any one of claims 9 to 12,
**characterized in that**
the air flow (30) is applied to the conveying surface (29) as a function of process parameters of the operation of the sub-quantity scale (10).

14. The method according to claim 13,
**characterized in that**
the air flow (30) is applied while at the same time the conveying channel (16) is subjected to vibrations.

## Revendications

1. Balance de quantités partielles (10) ayant un dispositif d'alimentation de produit (12), un dispositif de distribution de produit (13) et une pluralité de conteneurs de stockage de quantités partielles (15) pour transférer les quantités partielles à un dispositif de pesage à partir de lequel les quantités partielles passent dans un conteneur d'emballage (26), les produits (18) étant alimentés dans les conteneurs de stockage de quantités partielles (15) au moyen d'un dispositif de convoyeur de vibration, qui comprend un canal de convoyage (16) et est assigné au conteneur de stockage de quantités partielles (15)
**caractérisé en ce qu'**
un dispositif de tuyère (27) pour soumettre une surface de convoyage (29) du canal de convoyage (16) à un flux d'air (30) orienté au sens de convoyage est disposé dans une partie de transfère entre le dispositif de distribution de produit (13) et le canal de convoyage (16).

2. Balance de quantités partielles selon la revendication 1,
**caractérisé en ce que**
le dispositif de tuyère (27) est disposé sous un bord de transfère (19) du dispositif de distribution de produit (13) et encastré contre le sens de convoyage du canal de convoyage (16) par rapport au bord de transfère (19).

3. Balance de quantités partielles selon la revendication 2,
**caractérisé en ce que**
le dispositif de tuyère (27) est disposé à une partie d'écoulement (17) du canal de convoyage (16) sous une saillie (28) en forme de toit du dispositif de distribution de produit (13), ladite saillie (28) chevauchant la partie d'écoulement et étant limitée par le bord de transfère (19).

4. Balance de quantités partielles selon l'une quelconque des revendications,
**caractérisé en ce que**
le dispositif de tuyère (27) est formé de telle manière que la surface de convoyage (29) est soumise au flux d'air (30) de telle manière qu'un coussin d'air (31) est formé sur la surface de convoyage (29).

5. Balance de quantités partielles selon la revendication 4,
**caractérisé en ce que**
le dispositif de tuyère (27) est formé de telle manière que le flux d'air (30) comprend une section transversale de flux essentiellement rectangulaire.

6. Balance de quantités partielles selon la revendication 5,
**caractérisé en ce que**
le dispositif de tuyère (27) comprend au moins un tuyère (32) ayant une fente de tuyère rectangulaire.

7. Balance de quantités partielles selon la revendication 5, **caractérisé en ce que**
le dispositif de tuyère comprend une pluralité de tuyères disposés en ligne et parallèles à la surface de convoyage (29) du canal de convoyage (16).

8. Dispositif de tuyère (27) pour une balance de quantités partielles selon l'une ou plusieurs quelconque des revendications 1 à 7,
**caractérisé en ce que**
le dispositif de tuyère (27) forme une unité modulaire ensemble avec le canal de convoyage (16).

9. Procédé à transférer une quantité partielle d'un produit alimenté au moyen d'un dispositif d'alimentation de produit (12) d'un dispositif de distribution de produit (13) à un conteneurs de stockage de quantités partielles (15) qui sert à transférer des quantités partielles à un dispositif de pesage à partir de lequel les quantités partielles passent dans un conteneur d'emballage (26), les produits étant alimentés dans les conteneurs de stockage de quantités partielles (15) au moyen d'un dispositif de convoyeur de vibration, qui comprend un canal de convoyage (16) et est assigné au conteneur de stockage de quantités partielles (15)
**caractérisé en ce qu'**
une surface de convoyage (29) du canal de convoyage est soumise à un flux d'air (30) orienté au sens de convoyage au moyen d'un dispositif de tuyère (27) dans une partie de transfère entre le dispositif de distribution de produit et le canal de convoyage.

10. Procédé selon la revendication 9,
**caractérisé en ce que**
le flux d'air (30) est appliqué de telle manière qu'un coussin d'air (31) est formé sur la surface de convoyage (29) du canal de con-voyage (16).

11. Procédé selon la revendication 9 ou 10,
**caractérisé en ce que**
le flux d'air (30) est appliqué de telle manière que le flux d'air (30) est formé parallèle à la surface de convoyage (29) du canal de convoyage (16).

12. Procédé selon l'une quelconque des revendications 9 à 11,
**caractérisé en ce que**
le flux d'air (30) est appliqué à la surface de convoyage (29) dans une manière discontinue.

13. Procédé selon l'une quelconque des revendications 9 à 12,
**caractérisé en ce que**
le flux d'air (30) est appliqué à la surface de convoyage (29) en dépendance des paramètres de procédé de l'opération de la balance de quantités partielles (10).

14. Procédé selon la revendication 13,
**caractérisé en ce que**
le flux d'air (30) est appliqué pendant le canal de convoyage est soumis aux vibrations.
